# EUROPEAN PATENT APPLICATION

(11) **EP 3 733 592 A1**
(43) Date of publication of application: **04.11.2020**
(21) Application number: 17936008.6
(22) Date of filing: 29.12.2017
(51) Int. Cl.: C01B 3/06, C01B 3/08, C02F 1/68

(54) **HYDROGEN GAS GENERATING BODY**

(71) Applicant: Ecomo International Co., Ltd., Iizuka-shi, Fukuoka 820-0066 (JP)
(72) Inventor: FUKUOKA Kazuhisa, Iizuka-shi, Fukuoka 820-0066 (JP)
(74) Representative: Fédit-Loriot
(86) International application number: PCT/JP2017/047411
(87) International publication number: WO 2019/130598

(57) **Abstract**

Provided is a hydrogen gas generating body capable of generating a hydrogen-added liquid in a shorter time than with conventional hydrogen-adding apparatuses. This hydrogen gas generating body is constituted by a hydrogen generating composition that generates hydrogen by retaining water, and a housing body formed to freely house the hydrogen generating composition by having a hydrogen gas permeable film overlaying a backing comprising a pouched non-woven fabric. The invention is also characterized in that: the housing body has the hydrogen gas permeable film overlaid on the inner side of the backing; the housing body has the hydrogen gas permeable film overlaid on the outer side of the backing; or the housing body comprises two layers of the backing with the hydrogen gas permeable film overlaid therebetween.

## Description

### [Technical Field]

The present invention relates to a hydrogen gas generating body producing hydrogen-containing liquid by containing hydrogen gas in liquid.

### [Background Art]

Water which we ingest on a daily basis plays an extremely important role for creating a foundation for health and focus on drinking water is further increased while growing health consciousness among people.

Conventionally, it is proposed various drinking water meeting such above needs. For example, it is well-known oxygen water in which a lot of oxygen is dissolved in drinking water and hydrogen water in which hydrogen is dissolved.

Especially, it is conducted various reports contributing health concerning the hydrogen water in which molecular hydrogen is contained, such as decrease of in vivo oxidative stress, increase suppression of blood LDL.

Although such hydrogen water is produced by dissolving hydrogen in water, it is generally difficult to obtain hydrogen or to dissolve pure hydrogen in water.

Further, it is desirable that the hydrogen water is served for drinking as soon as possible after preparation of the hydrogen water since hydrogen is gradually released with time so long as a container with extremely low hydrogen permeability is not used.

Further, since drinking water is taken up by the body, it is necessary to prevent as much as possible elution of reaction residual or metallic ions and the like produced in a generation process of hydrogen.

Thus, in order to be able to prepare the hydrogen water with safe and easy in general household and the like, it is proposed a hydrogenation equipment in which a hydrogen generation composition is encapsulated in a bottomed cylindrical container with a length to an extent of several centimeters (for example, see PTL1).

According to the above hydrogenation equipment, the equipment is thrown into a PET bottle and the like in which water is accommodated and the PET bottle is sealed, thereby the hydrogen water can be produced by containing hydrogen in water.

By the way, in the conventional hydrogenation equipment according to PTL1, it is necessary operation to take out the hydrogen generation composition from a moisture-proof packaging bag, to insert independently the hydrogen generating composition into a closed container and further to add predetermined amount of water for reacting with the hydrogen generating composition and close a lid of the closed container.

Such troublesome operation is difficult, in particular, for a person being not good at the above fine work such as senior citizens, thus it is desired means capable of producing the hydrogen water more easily. In a selective hydrogenation equipment according to PTL2, the hydrogen generating composition is accommodated in a hydrogen babble forming body constituted from a gas permeable membrane, thereby the selective hydrogenation equipment is thrown into the container such as the PET bottle and the like having water therein and the container is sealed. According to only this simple operation, hydrogen is contained in water and the hydrogen water can be generated.

### [Citation List]

### [Patent Literature]

[PLT1] Japanese Patent No. 4652479
[PLT2] Japanese Patent No. 4950352

### [Summary of Invention]

### [Technical Problem]

The above selective hydrogenation equipment according to PTL2 is quite better at a point that the hydrogen containing liquid can be easily obtained even by a person being not good at fine work such as at least senior citizens.

However, in the selective hydrogenation equipment according to PTL2, water as liquid in drinking water cannot be distributed in the gas permeable membrane and only water as vapor or humid can be distributed and reacted with the hydrogen generating composition. Therefore, it takes a long time to generate enough amount of hydrogen so that the hydrogen water is supplied for drinking water, as a result, it is complicated.

The present invention has been done while taking the above circumstances into consideration and has an object to provide a hydrogen gas generating body in which liquid containing hydrogen (hereinafter, abbreviated as hydrogen-containing liquid) can be produced in a shorter time in comparison with the conventional hydrogenation equipment.

### [Solution to Problem]

In order to solve the above conventional problem, according to the hydrogen gas generating body according to the present invention,
(1) in the hydrogen generating body for producing hydrogen-containing liquid by containing hydrogen in liquid when the hydrogen generating body is thrown into the liquid, the hydrogen gas generating body is constituted from hydrogen generating composition for generating hydrogen by hydrating thereof and a housing body in which a hydrogen gas permeable membrane is overlaid on a base material formed from a pouched non-woven fiber, the housing body being formed to freely house the hydrogen generating composition.
   Further, the hydrogen gas generating body according to the present invention has also characteristic at the following points:
(2) in the above housing body, the hydrogen gas permeable membrane is overlaid on an inner side of the base material,
(3) in the above housing body, the hydrogen gas permeable membrane is overlaid on an outer side of base material,
(4) in the above housing body, the hydrogen gas permeable membrane is overlaid in a gap formed by constituting the base material in two layers.
(5)An inside/outside flow blocking portion is provided in the lower half portion of the outer peripheral surface of the housing according to the above (1) to (4), and the inside/outside flow blocking portion blocks the inflow of the liquid into the inside and the outflow of the reaction residue to the outside, and the hydrogen generating composition is surrounded by the inside/outside flow blocking portion and is substantially sealed on the end side of the lower half portion of the housing.
(6)The end part side of the lower half part of the housing body is formed to have a sharp tip, and the inside and outside flow blocking part is also formed to have a sharp tip.

### [Advantageous Effects of Invention]

By the hydrogen gas generating body according to the present invention, in the hydrogen generating body for producing hydrogen-containing liquid by containing hydrogen in liquid when the hydrogen generating body is thrown into the liquid, the hydrogen gas generating body is constituted from hydrogen generating composition for generating hydrogen by hydrating thereof and a housing body in which a hydrogen gas permeable membrane is overlaid with a base material formed from a pouched non-woven fiber, the housing body being formed to freely house the hydrogen generating composition. Thereby, the hydrogen gas permeable membrane which is easy to break is reinforced by the base material and mechanical strength of the housing body can be improved, moreover invasion of the liquid within the housing body can be promoted based on water content of the non-woven fiber.

Further, in the housing body, based on that the hydrogen gas permeable membrane is overlaid on the inner side of the base material, the base material of wet condition by the liquid forms stable liquid layer on the membrane surface when the hydrogen gas generating body is thrown into the liquid. Thereby, invasion of the liquid in the membrane is promoted, the liquid can be hydrated in the hydrogen gas generating composition within the housing body in a short time in comparison with a case that only the membrane exists, therefore the hydrogen can be generated.

Further, since the hydrogen permeable membrane can be protected by the outer base material, handling of the hydrogen gas generating body can be easily done.

Further, in the housing body, based on that the hydrogen gas permeable membrane is overlaid on the outer side of the base material, the early liquid invaded in the membrane is hydrated in the base material when the hydrogen gas generating body is thrown into the liquid, thereafter the outer liquid is derived in the housing body as the capillary phenomenon and invasion of the liquid within the membrane is promoted. Thereby, the liquid can be hydrated in the hydrogen gas generating composition within the housing body in a short time in comparison with a case that only the membrane exists, therefore the hydrogen can be generated.

Further, the base material becomes cushioning material against generation of heat at hydrogen producing reaction, therefore deterioration of the hydrogen gas permeable membrane due to heat generation can be prevented as much as possible.

Further, in the housing body, since the hydrogen gas permeable membrane is overlaid in the gap occurring based on that the base material is formed in two layers, the base material of wet condition by the liquid forms stable liquid layer on the membrane surface when the hydrogen gas generating body is thrown into the liquid. Thereby, invasion of the liquid in the membrane is promoted. Moreover, the early liquid invaded in the membrane is hydrated in the base material, thereafter the outer liquid is derived in the housing body as the capillary phenomenon and invasion of the liquid within the membrane is further promoted. Thereby, the liquid can be hydrated in the hydrogen gas generating composition within the housing body in a short time, therefore the hydrogen can be generated.

Further, the base material becomes cushioning material against generation of heat at hydrogen producing reaction, therefore deterioration of the hydrogen gas permeable membrane due to heat generation can be prevented as much as possible. In addition, since the hydrogen gas permeable membrane can be protected by the outer base material, handling of the hydrogen gas generating body can be easily done.

Further, since an inner/outer circulation blocking portion is provided in the lower half portion of the outer peripheral surface of the storage body according to (1) to (4), the inflow of the liquid into the interior and the outflow of the reaction residue to the outside are blocked, and the hydrogen generating composition is surrounded by the inner/outer circulation blocking portion and is substantially sealed to the end side of the lower half portion of the storage body, the outflow of the reaction residue from the lower half portion can be prevented as much as possible because the lower half portion of the hydrogen gas generating body is heavier than the upper half portion and the lower half portion is stably positioned below in the liquid, and since the liquid enters the storage body from the upper half portion and the generated hydrogen is also discharged from the upper half portion, the outflow of the reaction residue to the outside of the storage body can be reliably prevented.

Since the end portion side of the lower half portion of the storage body is formed with a sharp tip and the inside/outside flow blocking portion is also formed with a sharp tip, the direction of charging the hydrogen gas generator into the liquid in the preparation container such as a PET bottle can be intuitively grasped.

### [Brief Description of Drawings]

[Fig. 1](a) is a partially perspective view of the hydrogen gas generating body according to the first embodiment, (b) is a sectional view of (a) along a-a' line, (c) is a partially perspective view of the hydrogen gas generating body according to the second embodiment, (d) is a sectional view of (c) along b-b' line, (e) is a partially perspective view of the hydrogen gas generating body according to the third embodiment and (f) is a sectional view of (e) along c-c' line.
[Fig. 2](a) is a front view of the hydrogen gas generating body according to the fourth embodiment, (b) is a partially perspective view of (a) and (c) is a sectional view of (b) along d-d' line.
[Fig. 3] is an explanatory view to prepare the hydrogen-containing liquid by throwing the hydrogen gas generating body according to any of the first ∼ the fourth embodiments into a preparation container.
[Fig. 4] is a front view of a modification of the hydrogen gas generating body according to the fourth embodiment.
[Fig. 5] is an explanatory view to prepare the hydrogen-containing liquid by throwing the modification of the hydrogen gas generating body according to the fourth embodiment into a preparation container.
[Fig. 6] is an explanatory view indicating a process to constitute the hydrogen generating unit by accommodating the hydrogen gas generating body according to any of the first ∼ the fourth embodiments in the hydrogen generating container of the first example.
[Fig. 7] is an explanatory view to prepare the hydrogen-containing liquid by throwing the hydrogen generating unit in which the hydrogen gas generating body according to any of the first ∼ the fourth embodiments is accommodated in the hydrogen generating container according to the first into the preparation container.
FIG. 8 is an external perspective view showing a configuration of a hydrogen generating container according to a second example for storing a hydrogen gas generating body according to any of the first to fourth embodiments.
FIG. 9 is an exploded perspective view showing a configuration of a hydrogen generating container according to a second example for storing a hydrogen gas generator according to any of the first to fourth embodiments;.
FIG. 10 is a side view showing a configuration of a hydrogen generating container according to a second example for containing a hydrogen gas generator according to any of the first to fourth embodiments;.
FIG. 11 is an A-A longitudinal sectional view showing a configuration of a hydrogen generating container according to a second example for containing a hydrogen gas generating body according to any of the first to fourth embodiments.
FIG. 12 is a D-D cross-sectional view showing a configuration of a hydrogen generating vessel according to a second example for containing a hydrogen gas generator according to any of the first to fourth embodiments;.
Fig. 13 is a C-C cross-sectional view showing the configuration of a hydrogen generating vessel according to a second example for containing a hydrogen gas generator according to any of the first to fourth embodiments.
FIG. 14 is a B-B cross-sectional view showing a configuration of a hydrogen generating vessel according to a second example for containing a hydrogen gas generator according to any of the first to fourth embodiments;.
FIG. 15 is a plan view showing a configuration of a hydrogen generating container according to a second example for containing a hydrogen gas generator according to any of the first to fourth embodiments;.
FIG. 16 is an explanatory diagram showing the process of accommodating the hydrogen gas generator according to any of the first to fourth embodiments in the hydrogen generating container according to the second example to constitute the hydrogen generating unit.
FIG. 17 is an explanatory diagram for preparing a hydrogen-containing liquid by charging a hydrogen generating unit containing a hydrogen gas generator according to any of the first to fourth embodiments in a hydrogen generating container according to the second example into a preparation container.
FIG. 18 is a longitudinal sectional view showing a configuration of a hydrogen generating vessel according to a third example for containing a hydrogen gas generating body according to any of the first to fourth embodiments;.

### [Description of Embodiments]

The present invention relates a hydrogen gas generating body producing hydrogen-containing liquid by containing hydrogen gas in liquid when the hydrogen gas generating body is thrown into the liquid.

Further, a characteristic point of the hydrogen gas generating body according to the present invention is that the hydrogen gas generating body is constituted from hydrogen generating composition generating hydrogen when hydrated and a housing body in which a hydrogen gas permeable membrane is overlaid on a base material formed from a pouched non-woven fiber, the housing body being formed to freely house the hydrogen generating composition.

Here, although the liquid to dissolve hydrogen is not especially limited, such liquid can be made as liquid used for not only human but also living body such as drink including water, juice, tea and the like or liquid medicine used for injection, drip infusion and the like.

Further, the hydrogen generating composition is not especially limited so long as the composition can generate hydrogen by contacting with water and such composition may be mixture.

As the mixture generating hydrogen by contacting with water, for example, it can be raised mixture of a metal or metal compound having ionizing tendency higher than hydrogen and a reaction accelerator such as acid or alkali and the like.

Further, as the metal preferably used, for example, it can be raised iron, aluminum, nickel, cobalt, zinc and the like and as the preferable reaction accelerator, for example, in addition to various acids, calcium hydroxide, calcium oxide, anion exchange resin, baked calcium, magnesium oxide, magnesium hydroxide and the like can be used.

Further, in the hydrogen generating composition, within a range that hydrogen producing reaction necessary for practice is not hindered, substance having functionality can be suitably added if necessary. For example, based on that substance generating endothermal reaction by contacting with water (for example, urea or substance corresponding to feed additive generating the same effects as the urea), heat generated according to hydrogen producing reaction can also be controlled.

Further, in the hydrogen generating composition, powdered calcium carbonate (CaCO₃) may be contained. The calcium carbonate functions as heat transmission substance which transmits heat generated with hydrogen by hydration of the hydrogen generating composition to the hydrogen permeable membrane. Based on existence of the calcium carbonate, heat is transmitted to the hydrogen permeable membrane and the hydrogen permeable membrane becomes soft. Further, since the hydrogen permeable membrane is expanded by generated hydrogen, fine holes through which hydrogen molecular and vapor are passed are further enlarged. Thereby, permeability of hydrogen and vapor is improved and hydrogen producing reaction can be further encouraged, as a result, the hydrogen-containing liquid can be produced in a shorter time.

The housing body has the hydrogen gas permeable membrane as release means to release hydrogen generated within the inside of housing body out of the hydrogen gas generating body and the housing body is formed by overlaying the hydrogen gas permeable membrane on the base material made from the pouched non-woven fiber which freely houses the hydrogen generating composition.

The hydrogen gas permeable membrane is a thin film to separate only hydrogen gas and release. As the hydrogen gas permeable membrane, it can be raised polymer membrane and the like such as aromatic polyimide, cellulose acetate and the like. Further, the hydrogen gas permeable membrane acts as function to restrain that solid residue or liquid of metal ions flows outside.

Further, in the hydrogen permeable membrane, only water as vapor invades within the membrane and only hydrogen gas is generally released from inside of the membrane. For example, as the hydrogen gas permeable membrane, it can be preferably used a so-called microporous film in which there are formed many fine holes that cannot permeate water in liquid state and can permeate hydrogen gas or vapor.

The housing body may be provided with an inner/outer circulation blocking portion at a lower half portion of the outer peripheral surface of the housing body. The inside/outside flow blocking portion is made of a flexible sheet-like synthetic resin material which blocks the inflow of liquid into the housing body and the outflow of reaction residue to the outside, and is formed of, for example, polyethylene, polypropylene, polyvinyl chloride, polystyrene, PET resin, polyvinylidene chloride resin, or the like.

In addition, it is desirable that the inner/outer flow blocking portion is made of a material having excellent resistance to heat generation during the hydrogen generation reaction and to acids and alkalis, and examples thereof include polyethylene, polypropylene, polyvinylidene chloride resin, and the like.

The inner/outer circulation blocking portion is superposed on a lower half portion of the housing body formed of a nonwoven fabric or the like. In this case, although the inside/outside flow blocking portion may be adhered to the outer peripheral surface of the housing body or may be closely covered, it is desirable to adhere the inside/outside flow blocking portion from the viewpoint of outflow of reaction residue or the like.

Inside the inside of the inside/outside flow blocking part, the hydrogen generating composition is surrounded by the inside/outside flow blocking part and is stored in an almost sealed state on the end side of the lower half part of the storage body. In the sealing, for example, a container such as a nonwoven fabric is sealed with a heat seal or the like, and the sealing portion is formed so that liquid flowing into the upper half of the container from the outside can flow into the hydrogen generating composition of the lower half.

Further, the housing body can be formed such that the end portion side of the lower half portion having the inner and outer flow blocking portion formed therein is sharpened at the tip together with the inner and outer flow blocking portion. By forming in this way, the direction in which the hydrogen gas generator is charged into the preparation container such as a PET bottle can be intuitively understood.

As mentioned in the above, according to the hydrogen gas generating body of the present embodiment, in comparison with the conventional hydrogenation equipment, hydrogen can be produced in a short time and moreover it can be strengthened prevention that vice-generative production after production of hydrogen flows into drinking water.

Further, in the hydrogen gas generating body mentioned in the above, when the hydrogen gas generating body is thrown into liquid, although vapor derived from liquid is made water to invade inside of the housing body and react with the hydrogen generating composition, it is not necessarily limited to this.

For example, as the hydrogen generating unit for producing hydrogen-containing liquid by throwing in liquid and containing hydrogen in liquid, such unit being proposed by the present inventor, it is used the housing body in which there are provided non-flowing state retaining means for retaining water in the non-flowing state under which water does not react with the hydrogen generating composition and release means for releasing hydrogen out of the hydrogen gas generating body, wherein the non-flowing state retaining means changes water in the non-flowing state to the flowing state under which water can react with the hydrogen generating composition by adding a predetermined amount of energy from outside of the housing body, wherein water in the flowing state reacts with the hydrogen generating composition by triggering through given energy and wherein hydrogen produced in the housing body is released in liquid through the release means. Thereby, without invasion of liquid into the hydrogen gas generating body or with invasion of liquid into the hydrogen gas generating body, it may be constituted that the hydrogen-containing liquid is produced. Here, the release means is not especially limited, for example, of course, needless to say for constitution of the housing body described in the present specification, it may be conceivable that the water-resistant hydrogen permeable membrane is constituted from water-proof breathable material, semi-transparent membrane, reverse osmosis membrane and is realized by mechanical valve mechanism such as check valve and further hydrogen gas is made releasable while retaining invasion of liquid into the housing body through capillary narrow path.

For example, the non-flowing state retaining means is a flexible partitioned room containing water in a sealed state and realizing the non-flowing state. This partitioned room is constituted so as to have a weak portion that ejects water contained therein by giving a predetermined amount of outer force as energy, thereby the flowing state is realized. Thus, a user presses the partitioned room, that is, a small pouch, in which water for reaction is contained, by fingers and breaks the pouch, thereby hydrogen generating reaction can be taken place.

Based on the above constitution, in comparison with the conventional hydrogenation equipment mentioned previously, production of hydrogen can be conducted in a short time.

Hereinafter, the hydrogen generating body according to the present embodiment will be described with reference to the drawings.

### [First Embodiment]

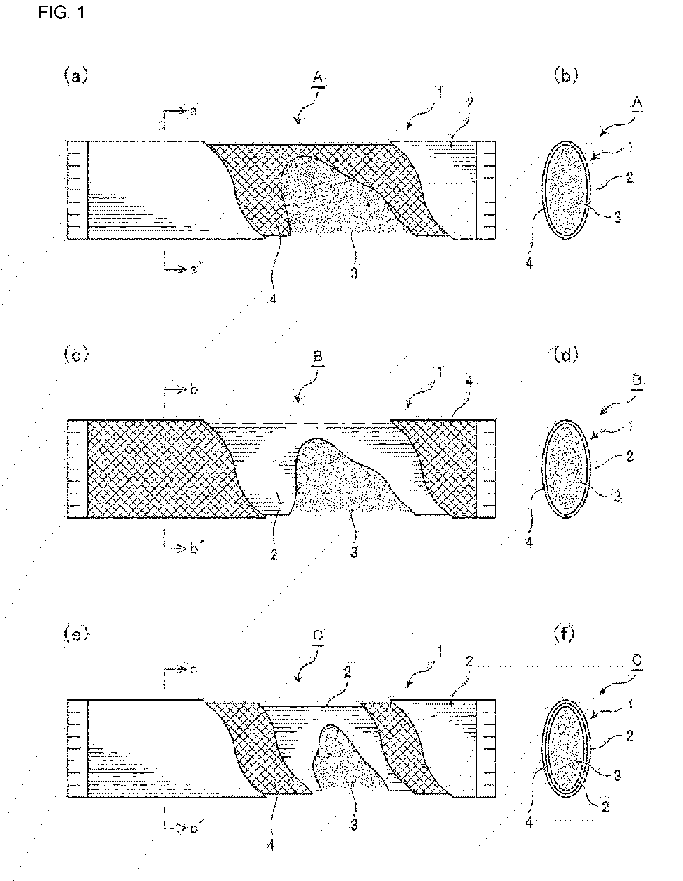

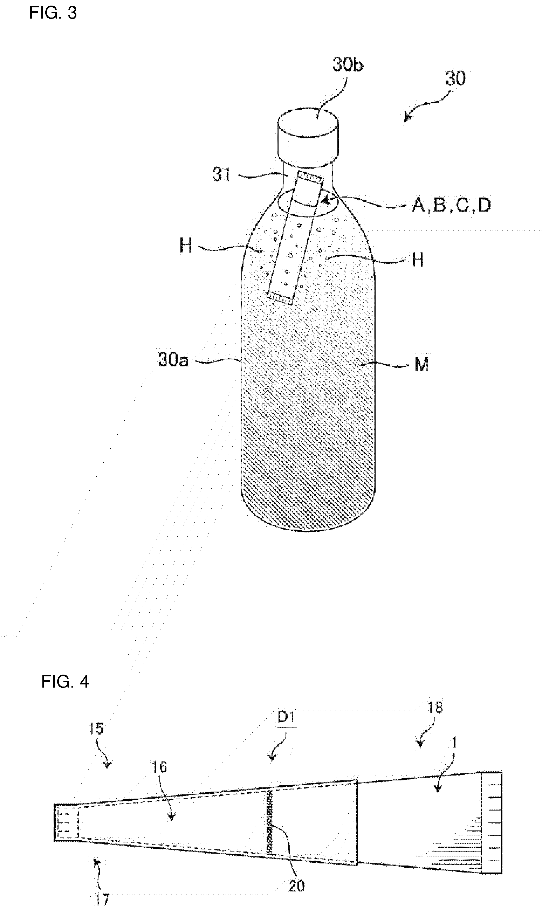

As shown in FIGS. 1 (a), 1 (b), and 3, the hydrogen gas generator A according to the first embodiment is a hydrogen gas generator A which is charged into a liquid M to contain hydrogen in the liquid M to produce a hydrogen-containing liquid, wherein the hydrogen gas generator A is composed of a hydrogen generating composition 3 which is hydrated and generates hydrogen, and a housing 1 in which the hydrogen generating composition 3 is formed so that the hydrogen generating composition 3 can be housed by superposing a hydrogen gas permeable film 4 on a base material 2 made of a bag-like nonwoven fabric.

In the housing 1, a hydrogen gas permeable membrane 4 is superposed on the inside of the base material 2.

FIG. 1A is a partial perspective view of the hydrogen gas generator A according to the present embodiment, and FIG. 1B is a sectional view taken along line a-a' of FIG. 1A.

Concretely, the housing body 1 is formed in a long pouch and the hydrogen generating composition 3 is contained therein. Here, in all embodiments described hereinafter, the hydrogen generating composition 3 is a mixed powder containing aluminum and calcium hydroxide as main component.

By constituting the hydrogen gas generating body A in this way, the liquid M flowing into the housing body 1 from the outside as steam in use comes into contact with the hydrogen generating composition 3 to start the hydrogen generating reaction.

The hydrogen generating composition 3 containing the liquid M produces hydrogen gas H while producing alumina cement as a reaction residue in the hydrogen production reaction, and the hydrogen gas H is discharged to the outside through the housing 1.

Of the metal ions (aluminum ion) eluted by the hydrogen generating composition 3 containing the liquid M, the reaction residue of the metal ions not contributing to the formation of the alumina cement, such as the alumina cement, remains inside the housing 1, thereby preventing the outflow to the outside of the hydrogen gas generating body A.

Thus, although the hydrogen gas permeable membrane 4 is a thin film, it can be used as a hydrogen gas generator A by being overlapped with the base material 2, and the hydrogen gas permeable membrane 4 is brought close to or in contact with the base material 2, so that the liquid M is promoted to enter the inside of the housing 1 compared with the case of the membrane 4 alone, and the hydrogen gas H can be generated in a short time.

That is, when the hydrogen gas generator A is charged into the liquid M, the base material 2 in a wet state forms a stable liquid layer on the surface of the film 4 by the liquid M, whereby the intrusion of the liquid M into the film 4 is promoted, and the liquid M can be hydrated in the hydrogen generating composition 3 in the housing 1.

As mentioned in the above, the hydrogen gas generating body A is constituted according to the above.

Further, generating procedure of the hydrogen gas H will be concretely described. As shown in Fig. 3, the hydrogen generating body A is thrown into the drinking water M as the predetermined liquid contained in the preparation container 30, thereby the hydrogen-containing water can be prepared by containing hydrogen in the drinking water M.

The preparation container 30 is a PET bottle container of 500 ml which has a pressure resistance used when carbonated water and the like is sold and the preparation container 30 is constituted from a hollow container body 30a and a screw cap 30b which is screwed together with an upper opening of the container body 30a, thereby the container body 30a is surely sealed. Here, although the PET bottle (container made of polyethylene terephthalate) is used as the container in the present embodiment, it is not limited to this. It may be used a container made of glass, aluminum material and the like.

In the preparation container 30, the drinking water M is contained up to a portion near a bottle neck (48/50 ∼ 249/250 of inner volume of the preparation container 30), thereby liquid phase is formed. On the other hand, the upper portion thereof is made as the air reservoir 31, thereby gas phase is formed.

Concretely, the hydrogen gas generating body A is soaked in the drinking water M from the upper opening of the preparation container 30 in which the drinking water M is filled. Thereafter, as shown in Fig. 3, the preparation container 30 is sealed by the screw cap 30b. Thereby, the hydrogen gas H is released form the housing body 1.

The released hydrogen gas H is filled while enlarging the air reservoir 31 of the preparation container 30 and is dissolved in the drinking water M according to increase of inner pressure of the preparation container 30, thereby the hydrogen-containing water is prepared.

Here, the hydrogen gas generating body A according to the present embodiment is constituted so that hydrogen producing reaction is terminated for 10 ∼ 20 hours after thrown into the preparation container 30. Thus, in a case that the user wants to drink right after the hydrogen-containing water is prepared, based on that the user grasps approximate center portion of the preparation container 30 and rapidly shakes about 180° in the left and right direction and for about 30 seconds, thereby stirs the preparation container 30, thereby it can be produced the hydrogen-containing liquid with 5.0 ∼ 7.0 ppm of hydrogen.

Further, it is constituted so that the preparation container 30 is settled for about 23 hours in a refrigerator after the hydrogen producing reaction is terminated and the preparation container 30 is stirred as mentioned in the above, thereby the hydrogen-containing liquid with about 7.0 ppm can be produced.

Here, generally, in the preparation container 30 in which the drinking water M is filled, the air reservoir 31 is formed as mention in the above. Since this air reservoir 31 becomes a factor to decrease concentration of content of hydrogen in production of hydrogen, it is preferable that the air reservoir 31 does not exist as much as possible when the hydrogen gas generating body A is thrown into and the preparation container 30 is sealed by the screw cap 30b.

As described above, the hydrogen gas generating body A according to the first embodiment is a hydrogen gas generating body A which generates a hydrogen-containing liquid by including hydrogen in the liquid M by charging the hydrogen gas generating body A into the liquid M, and the hydrogen gas generating body A is composed of the hydrogen generating composition 3 which is hydrated and generates hydrogen, and the housing body 1 which is formed so as to house the hydrogen generating composition 3 by superposing the hydrogen gas permeable membrane 4 on the inside of the base material 2 made of a bag-like nonwoven fabric, so that the hydrogen gas permeable membrane 4 which is easy to be broken is reinforced by the base material 2 to improve the mechanical strength of the housing body.

When the hydrogen gas generator (A) is charged into the liquid (M), the base material (2) in a wet state forms a stable liquid layer on the surface of the film (4) by the liquid (M), whereby the intrusion of the liquid (M) into the film (4) is promoted, and the liquid (M) can be hydrated in the hydrogen generating composition (3) inside the housing (1) in a shorter time than when the film (4) is alone to generate hydrogen.

Further, since the hydrogen gas permeable membrane 4 can be protected by the outer base material 2, the handling of the hydrogen gas generator A becomes easy.

Next, the hydrogen gas generator B according to the second embodiment will be described. The parts common to the hydrogen gas generator A according to the first embodiment are denoted by the same reference numerals and the description thereof will be omitted.

### [Second Embodiment]

As shown in FIGS. 1 (c), 1 (d), and 3, the hydrogen gas generating body B according to the second embodiment is configured such that a hydrogen gas permeable membrane 4 is superposed on the outside of a base material 2 made of bag-like nonwoven fabric.

FIG. 1 (c) is a partial perspective view of the hydrogen gas generator B according to the present embodiment, and FIG. 1 (d) is a sectional view taken along line b-b ' of FIG. 1 (c).

By constituting the hydrogen gas generating body B in this way, the liquid M flowing into the housing body 1 from the outside as steam in use comes into contact with the hydrogen generating composition 3, and the hydrogen generating reaction is started.

The hydrogen generating composition 3 containing the liquid M produces hydrogen gas H while producing alumina cement as a reaction residue in the hydrogen production reaction, and the hydrogen gas H is discharged to the outside through the housing 1.

Of the metal ions (aluminum ion) eluted by the hydrogen generating composition 3 containing the liquid M, the reaction residue of the metal ions not contributing to the formation of the alumina cement, such as the alumina cement, remains inside the housing 1 to prevent the outflow to the outside of the hydrogen gas generating body A.

Further, since the hydrogen generating composition 3 directly comes into contact with the nonwoven fabric serving as the base material 2, the base material 2 serves as a cushioning material against heat generated during the hydrogen generating reaction, thereby preventing deterioration of the hydrogen gas permeable membrane 4 due to heat generation as much as possible.

Thus, although the hydrogen gas permeable membrane 4 is a thin film, it can be used as a hydrogen gas generator B by being overlapped with the base material 2, and the hydrogen gas permeable membrane 4 is brought close to or in contact with the base material 2, so that the liquid M is promoted to enter the inside of the housing 1 compared with the case of the membrane 4 alone, and hydrogen gas H can be generated in a short time.

That is, when the hydrogen gas generator (B) is charged into the liquid (M), the initial liquid (M) that has entered the film (4) is hydrated in the base material (2), and then the external liquid (M) is led out into the container (1) like a capillary phenomenon, and the intrusion of the liquid (M) into the film (4) is promoted, so that the liquid (M) can be hydrated in the hydrogen generating composition (3) inside the container (1).

As described above, the hydrogen gas generator B according to the second embodiment is constructed. The procedure for generating the hydrogen gas H is the same as that of the hydrogen gas generator A according to the first embodiment.

As described above, the hydrogen gas generating body B according to the second embodiment is constituted by superposing the hydrogen gas permeable membrane 4 on the outside of the base material 2, so that when the hydrogen gas generating body B is charged into the liquid M, the initial liquid M intruding into the membrane 4 is hydrated to the base material 2, and then the external liquid M is led out to the inside of the housing body 1 as a capillary phenomenon, the intrusion of the liquid M into the membrane 4 is promoted, and the liquid is hydrated to the hydrogen generating composition 3 inside the housing body 1 in a short time compared with the time when the membrane 4 alone is used to generate hydrogen.

Further, the base material 2 serves as a buffer material against heat generated during the hydrogen generation reaction, and the deterioration of the hydrogen gas permeable membrane 4 due to heat generation can be prevented as much as possible.

Next, the hydrogen gas generating body C according to the third embodiment will be described. Here, the common portions with the hydrogen gas generation bodies A, B according to the first and the second embodiments mentioned in the above will be described by adding the same reference signs and explanation thereof will be omitted as appropriate.

### [Third Embodiment]

In the hydrogen gas generating body C according to the third embodiment, as shown in Figs. 1(e), (f) and Fig. 3, the housing body 1 is constituted so that the base material 2 made of pouched non-woven fiber is formed in two layers and the hydrogen gas permeable membrane 4 is overlaid in the gap.

Here, Fig. 1(e) is a partial perspective view of the hydrogen gas generating body according to the present embodiment and Fig. 1(f) is a sectional view of Fig. 1(e) along c-c' line.

Based on that the hydrogen gas generating body C is constituted according to the above, the liquid M becoming vapor flowing into the housing body 1 from outside when used contacts with the hydrogen generating composition 3, thereby hydrogen producing reaction is started.

The hydrogen generating composition 3 hydrated by the liquid M produces hydrogen gas while producing alumina cement becoming reaction residue during hydrogen generating reaction and the hydrogen gas H is released outside by passing through the housing body 1.

Further, among metal ions (aluminum ion) eluted due to that the hydrogen generating composition 3 is hydrated by the liquid M, reaction residue of metal ion not contributing to production of alumina cement and alumina cement and the like is stored within the housing body 1, thereby it is prevented that these residues flows out from the hydrogen gas generating body C.

As mentioned, although the hydrogen gas permeable membrane 4 is a thin film, the hydrogen gas permeable membrane 4 can withstand use as the hydrogen gas generating body C by overlaying on the base material 2. Moreover, the hydrogen permeable membrane 4 is close to or contacts with the base material 2. Thus, invasion of the liquid M into the housing body 1 is promoted in comparison with a case that the membrane 4 is used alone and the hydrogen gas H can be generated in a short time.

That is, when the hydrogen gas generating body C is thrown into the liquid M, the outside base material 2 becoming wet state by the liquid M forms stable liquid layer on the surface of the membrane 4, thereby invasion of the liquid M into the membrane 4 is promoted and moreover the outside liquid M is lead into the housing body 1 as capillary phenomenon. Thus, invasion of the liquid M into the membrane 4 is further promoted and the liquid M can be hydrated in the hydrogen generating composition 3 existing in the housing body 1 in a short time.

The hydrogen gas generating body C according to the third embodiment is constituted corresponding to the above as mentioned. Here, generating procedure of the hydrogen gas H is as same as a case of the hydrogen gas generating body A according to the first embodiment.

As mentioned, in the hydrogen gas generating body C according to the third embodiment, the base material 2 has approximate same melting point as that of the hydrogen gas permeable membrane 4 and the base material 2 is constituted in two layers of the inner base material 2 a melting point of which is lower in composition with the outer base material 2 and the outer base material 2 a melting point of which is higher in comparison with the inner base material 2, further the hydrogen gas permeable membrane 4 is overlaid in the gap, thereby the housing body 1 is constituted. Therefore, welding cutting characteristic of sealing portion of the housing body 1 at manufacturing of the hydrogen gas generating body C is excellent. That is, when the opening end of the housing body 1 is sealed by heat welding after the hydrogen generating composition 3 is filled, the inner base material 2 and the hydrogen gas permeable membrane 4 are first melted by contacting of heated blade and the inner side plane of the housing body 1 is firmly sealed in mixed state. On the other hand, based on the outer base material 2 having relatively high melting point, sticky of molten substance to the heated blade can be avoided and beautiful cutting can be done. Further, when the hydrogen gas generating body C is thrown into the liquid M, the outer base material 2 in wet state forms stable liquid layer on the surface of the membrane 4 by the liquid M, thereby invasion of the liquid M into the membrane 4 is promoted and moreover early liquid M invading into the membrane 4 hydrates the inner base material 2. Thereafter, as capillary phenomenon, outer liquid M is leaded in the inside of the housing body 1 and invasion of the liquid M into the membrane 4 is further promoted. Thus, the liquid M can be hydrated in the hydrogen generating composition 3within the housing body 1 in a short time, thereby hydrogen can be generated.

Further, the inner base material 2 becomes cushioning material against heat generation at the hydrogen producing reaction, therefore deterioration of the hydrogen gas permeable membrane 4 by heat generation can be prevented as much as possible, in addition, since the hydrogen gas permeable membrane 4 can be protected by the outer base material 2, handling of the hydrogen gas generating body C can be made easily.

Next, the hydrogen gas generator D according to the fourth embodiment will be described. The parts common to the hydrogen gas generators A, B, and C according to the first, second, and third embodiments are denoted by the same reference numerals and the description thereof will be omitted.

### [Fourth Embodiment]

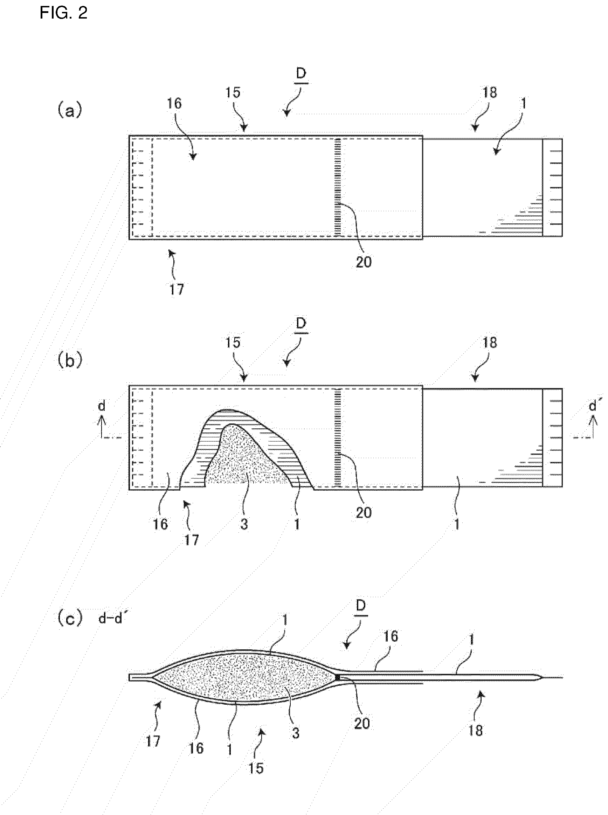

As shown in FIGS. 2 (a) to 2 (c) and 3, the hydrogen gas generating body D according to the fourth embodiment is configured such that an inside/outside flow blocking portion 16 is provided in the lower half portion 15 of the outer peripheral surface of the housing body 1 to block the inflow of the liquid M into the inside and the outflow of the reaction residue to the outside, and the hydrogen generating composition 3 is surrounded by the inside/outside flow blocking portion 16 and is substantially sealed on the end side 17 of the lower half portion 15 of the housing body 1.

FIG. 2A is a front view of the hydrogen gas generator D according to the present embodiment, FIG. 2B is a partial perspective view of FIG. 2A, and FIG. 2C is a cross-sectional view taken along line d-d ' of FIG. 4B.

The inner/outer flow blocking portion 16 is a flexible sheet-like synthetic resin material that blocks the inflow of the liquid M into the container 1 and the outflow of the reaction residue to the outside, and is formed of polyethylene that is excellent in resistance to heat generation during a hydrogen generation reaction and to acids and alkalis.

Further, the inside/outside flow blocking portion 16 is superposed to cover the lower half portion 15 of the housing 1 according to the first to third embodiments, and the inside/outside flow blocking portion 16 is adhered to the outer peripheral surface of the housing 1.

Inside the inside of the inside/outside flow blocking portion 16, the hydrogen generating composition 3 is surrounded by the inside/outside flow blocking portion 16 and is stored in an almost sealed state on the end side 17 of the lower half portion 15 of the storage body 1. In the sealing, the housing 1 is sealed with a heat seal or the like, and the sealing portion 20 is formed so that the liquid M flowing into the upper half portion 18 of the housing 1 from the outside can permeate into the lower half portion 15 and flow into the hydrogen generating composition 3.

By forming the hydrogen gas generating body D in this way, the lower half part 15 becomes heavier than the upper half part 18 due to the uneven distribution of the hydrogen generating composition 3 inside the housing body 1, and the lower half part 15 is stably positioned below in the liquid M.

A sealing portion (20) of the container (1) for substantially sealing the hydrogen generating composition (3) is formed at a position approximately 2/3 of the inner and outer flow blocking portion (16) from the end portion side (17), and is formed so that even if reaction residue flows out from the sealing portion (20) toward the upper half portion (18), the reaction residue can be prevented from flowing out in a region approximately 1/3 above the sealing portion (20) and the inner and outer flow blocking portion (16).

The position of the sealing portion 20 formed in the housing 1 is not limited to this embodiment.

As described above, the hydrogen gas generator D according to the fourth embodiment is constructed. Note that the procedure for generating the hydrogen gas H is the same as that of the hydrogen gas generator A according to the first embodiment described above, but in the case of charging the hydrogen gas H into the preparation container 30, it is desirable to charge the hydrogen gas H into the preparation container 1 with the inner and outer flow blocking portion 16 facing downward in order to efficiently discharge the hydrogen gas H from the upper half portion 18 of the container 1.

As described above, since the hydrogen gas generating body D according to the fourth embodiment is formed by providing the inner and outer flow blocking portion 16 in the lower half portion 15 of the outer peripheral surface of the housing body 1, blocking the inflow of the liquid M into the interior and the outflow of the reaction residue to the exterior, and by surrounding the hydrogen generating composition 3 with the inner and outer flow blocking portion 16 and substantially sealing it on the end side 17 of the lower half portion 15 of the housing body 1, since the lower half portion 15 of the hydrogen gas generating body D is heavier than the upper half portion 18 and the lower half portion 15 is stably positioned downward in the liquid M, the outflow of the reaction residue from the lower half portion 15 can be prevented as much as possible, and the liquid M enters the interior of the housing body 1 from the upper half portion 18 and the generated hydrogen gas H is also discharged from the upper half portion 18, The outflow of the reaction residue to the outside of the housing 1 can be surely prevented.

In the hydrogen gas generator D according to the fourth embodiment, the housing 1 may be formed of a simple nonwoven fabric or the like without the hydrogen gas permeable membrane 4.

In this case, the procedure for generating the hydrogen gas H is the same as that of the hydrogen gas generator D according to the present embodiment described above, but in particular, it is necessary to feed the hydrogen gas into the preparation container 30 with the inner and outer flow blocking portion 16 facing downward.

That is, even if the upper half portion 18 of the hydrogen gas generator D is put into the preparation container 30 with the upper half portion 15 positioned downward, the lower half portion 15 is stably positioned downward in the liquid M with time because the lower half portion is heavier than the upper half portion 18, but there is a possibility that metal ions generated by the hydrogen generation reaction are discharged from the upper half portion 18 positioned downward by the liquid M penetrating into the upper half portion 18 and flowing into the lower half portion 15 at the initial stage of putting.

Next, a modification of the hydrogen gas generator D according to the fourth embodiment will be described. The parts common to the hydrogen gas generator D according to the fourth embodiment are denoted by the same reference numerals, and the description thereof will be omitted.

### [Modification of the Fourth Embodiment]

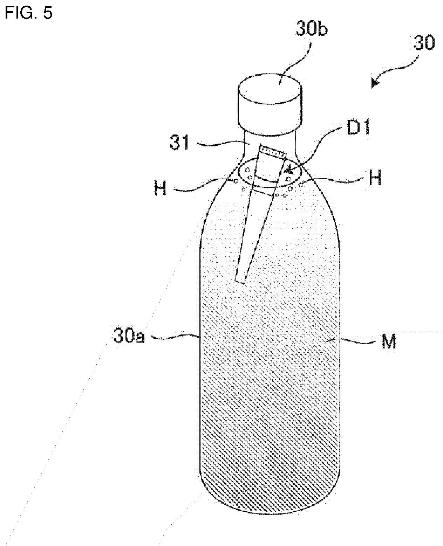

As shown in FIGS. 4 and 5, the hydrogen gas generating body D1, which is a modification of the hydrogen gas generating body D according to the fourth embodiment, is formed such that the end portion 17 of the lower half portion 15 of the containing body 1 is sharpened at the tip, and the inner and outer flow blocking portion 16 is also sharpened at the tip.

Specifically, the inner and outer flow blocking portions 16 are superimposed to cover the outer peripheral surface of the lower half portion 15 of the housing 1 formed in a bag shape having an approximately isosceles triangle shape as viewed from the front with the end portion side 17 as the apex.

Thus, the direction in which the hydrogen gas generator D1 is charged into the liquid M in the preparation container 30 such as a PET bottle can be intuitively grasped.

Next, a hydrogen water producing kit X having each of hydrogen gas generating bodies A ∼ D1 according to the above mentioned present embodiment will be described. The hydrogen gas generating bodies A ∼ D1 mentioned in the above, for example, can produce the hydrogen-containing liquid while preventing flowing out of metallic ions without independently hydrogen generating container and the like against the liquid M contained in the container body 30a such as the PET bottle and the like. However, use with the hydrogen generating container is not disturbed.

Therefore, it is possible that the hydrogen water producing kit X is constituted by combining each hydrogen gas generating body A ∼ D1 with a predetermined hydrogen generating container.

Further, the present inventor found, of course, that flowing out of metallic ions can be further restrained in a case that the hydrogen generating unit is constituted by combining with the predetermined hydrogen generating container and is thrown into the liquid M, and large amount of hydrogen can be generated from the hydrogen gas generating body A ∼ D1 in a shorter time. Therefore, it can be said that the hydrogen gas generating body A ∼ D1 is extremely advantageous for easily producing hydrogen-containing liquid with high concentration.

The hydrogen water producing kit X is a kit having mainly hydrogen generating body A ∼ D1, and a predetermined hydrogen generating container if necessary and auxiliary constitution element may be independently added. As auxiliary constitution element, for example, it can be raised a preparation container such as PET bottle and the like, an indicator to confirm concentration amount of dissolved hydrogen in the prepared hydrogen-dissolved liquid and a box for integrally packaging these and the like.

In the present specification, in particular, it will be described in detail several examples of the hydrogen generating container as the additional element of the hydrogen water producing kit X.

### [First Example of Hydrogen Generating Container]

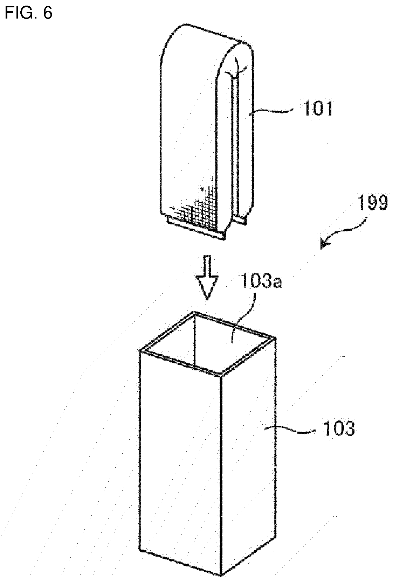

Fig. 6 is an explanatory view indicating a process constituting a hydrogen generating unit 199 by containing a hydrogen gas generating body 101 with any constitution of the hydrogen gas generating bodies A ∼ D1 mentioned in the above within a hydrogen generating container 103.

The hydrogen generating unit 199 produces the hydrogen-containing liquid by containing hydrogen in the liquid M based on that the hydrogen generating unit 199 is thrown in the liquid M and the hydrogen generating unit 199 is constituted from three members of a hydrogen generating body 101, hydrogen generating composition 102 stored in a pouch thereof and the hydrogen generating container 103 constituted capable of storing the hydrogen gas generating body 101 with an opening portion 103a becoming a water communication hole, formed in an outer wall shown in Fig. 6.

The hydrogen generating container 103 is formed in a bottomed longitudinal cylinder in which the opening portion 103a to store the hydrogen gas generating body 101 is formed at one end. A predetermined water communication hole may be formed in the container outer wall other than the opening portion 103a. In this case, it may be provided an openable and closable lid member to the opening portion 103a for storing the hydrogen gas generating body 101. In a case that an inner space shape of hydrogen generating container 103 is made in a right-angles parallelepiped which has a long side in the depth direction as shown in Fig. 6 and in a case that an opening shape of the opening portion 103a is defined by vertical x horizontal, vertical or horizontal may be respectively formed in a length larger than a thickness of the hydrogen gas generating body 101 folded in half (length corresponding to twice of thickness of the hydrogen gas generating body 101) or may be formed in a length larger than a short side width of the hydrogen gas generating body 101 (however, any of them is a length to an extent that the hydrogen gas generating body 101 does not take off from the hydrogen generating container 103).

Moreover, in the hydrogen generating container 103, it is formed a space capacity 198 in which the longitudinal hydrogen gas generating body 101 folded in half can be contained. Here, although polypropylene which is plastic sheet with excellent sealing characteristic is used for material of the hydrogen generating container 103, such material is not especially limited.

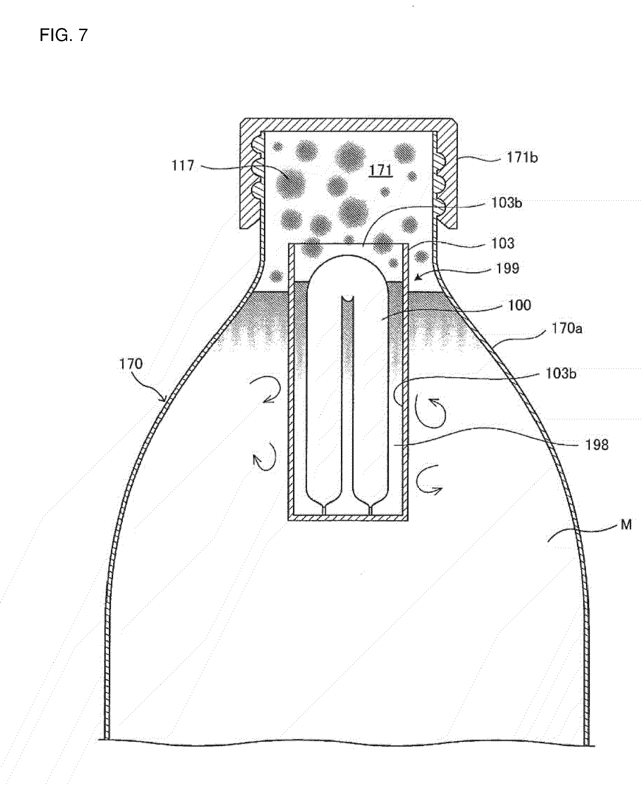

The longitudinal hydrogen gas generating body 101 is folded in half and contained in the hydrogen generating container 103. As shown in Fig. 7, the hydrogen generating container 103 is thrown into the preparation container 170 (for example, PET bottle) as it is and when the preparation container 170 is shaken, vapor derived from the liquid M within the preparation container 170 is penetrated in the hydrogen gas generating body 101, thereby vapor is reacted with the hydrogen generating composition 102. At that time, it is one characteristic point that appropriate conditions necessary for controlling constantly and stably hydrogen generating concentration, hydrogen generating amount and hydrogen generating time are set.

That is, the stable and optimal hydrogen reaction condition is determined so that it is controlled mutual relation between the water temperature of reaction water when the hydrogen gas generating body 101 is contained in the hydrogen generating container 103 and water flows into from the opening portion 103a at one end of the hydrogen generating container 103 and the space capacity 198 between the hydrogen gas generating body 101 contained in the hydrogen generating container 103 and the inner wall 103b of the hydrogen generating container 103.

Optimal and stable hydrogen production can be done by conducting the mutual relation control between the water temperature of reaction water necessary for mutual relation control, that is, water temperature of reaction water (a part of the liquid M) within the hydrogen generating container 103 affected by temperature of the liquid M in a peripheral of the hydrogen generating container 103 and reaction water amount (almost same as the space capacity 198) invaded in a remaining space within the hydrogen generating container 103 in which the hydrogen gas generating body 101 is contained.

In particular, since heat generation at the time of hydrogen reaction is high temperature of 70 ∼ 80 degree Celsius, hydrogen generating condition is changed because the reaction water invading within the narrow space capacity 198 in the hydrogen generating container 103 is naturally heated, thereby hydrogen concentration and other conditions becomes unstable. Therefore, since cooling operation by temperature of the liquid M as peripheral circumstance of the hydrogen generating container 103 is also influenced, early water temperature of drinking water before the hydrogen gas generating body 101 is thrown in becomes important control element.

Further, in a case that the preparation container 170 is served for drinking while the hydrogen generating unit 199 is contained in the preparation container 170, shape and size of each of members constituting the hydrogen generating unit 199 can be set so that such members do not clog throat of drinker. That is, in a case that the drinker drinks the liquid M in a state that the hydrogen generating unit 199 is not removed from the preparation container 170, the hydrogen gas generating body 101 is flown out from the opening portion 103a of the hydrogen generating container 103 and there is fear that the body 101 clog throat of the drinker. In order to prevent this, for example, as mentioned in the above, it may be adopted a constitution that an openable and closable lid body is provided to the opening portion 103a of the hydrogen generating container 103, thereby it can be prevented that the hydrogen gas generating body 101 ids flown out.

Further, even in a case that the hydrogen generating unit 199 itself is falsely drunk, it may be formed the hydrogen generating container 103 with a size or shape (for example, capsule state) that the hydrogen generating unit 199 does not clog throat of the drinker.

Here, it will be described a preferable volume of the hydrogen generating unit 199. Generally, the air reservoir 171 as mentioned in the above exists within the preparation container 170in which the liquid M is filled. Since this air reservoir 171 becomes a factor to decrease concentration of content of hydrogen in the hydrogen production, it is desirable as much as possible that the air reservoir 171 does not exist when the hydrogen generating unit 199 is thrown in and the preparation container 170 is sealed by the screw cap 170b.

Therefore, it is desired the volume of the hydrogen generating container 103 in the hydrogen generating unit 199 approximates or exceeds the volume of the early air reservoir 171 before the hydrogen generating unit 199 is thrown in. Thus, also in the hydrogen generating unit 199, the volume of the hydrogen generating container 103 is formed so as to become such volume of the air reservoir 171, as a result, the hydrogen generating container 103 is formed so that the air reservoir 171 scarcely exists.

Here, as a method to make the air reservoir 171 minimum, it is possible by independently throwing a spacer member with a shape of rectangle block made of material harmless to the living body or beads into the preparation container 170.

The hydrogen generating unit 199 was constituted by using the hydrogen generating container 103 constituted according to the above and the hydrogen generating unit 199 was thrown into the PET bottle of 500 ml in which water as the liquid M is contained. Further, the hydrogen concentration was actually measured, as a result, it was shown that the hydrogen water with high concentration can be prepared, in comparison with a case that only the hydrogen gas generating body 101 was thrown in without using the hydrogen generating container 103. Concretely, an average (number of trials is 13 times) of a case that only the hydrogen gas generating body 101 was thrown in was 7.96 ppm. Contrarily, in a case that the hydrogen generating unit 199 was constituted by using the hydrogen generating container 103 and hydrogen was generated, the hydrogen water with high concentration an average of which was 8.07 ppm exceeding 8.0 ppm could be produced.

Further, by using two hydrogen generating container 103 having relatively different space capacity 198 shown in Fig. 7 (accommodation space of the hydrogen gas generating body 101 and a apace to rule reaction water amount invaded in remaining space in the hydrogen generating container 103), temperature change of the hydrogen gas generating body 101 was measured in each case.

As a result, the hydrogen generation composition 102 stored in the hydrogen gas generating body 101 in a case of small space capacity 198 started the reaction with the liquid M (production of hydrogen) for about 1 minute to 1 minute 30 seconds after thrown in the liquid M and a peak of the reaction occurred for about 3 minutes 30 seconds to 4 minutes and reached 93.1 degree Celsius which is the maximum temperature. Thereafter, the temperature of the hydrogen generating composition 102 gradually decreased and lowered to about 30 degree Celsius after 20 minutes.

On the other hand, the hydrogen generation composition 102 stored in the hydrogen gas generating body 101 in case of large space capacity 198 started the reaction with the liquid M (production of hydrogen) for about 3 minutes to 3 minutes 30 seconds after thrown in the liquid M and a peak of the reaction occurred for about 5 minutes to 5 minutes 30 seconds and reached 93.1 degree Celsius which is the maximum temperature. Thereafter, the temperature of the hydrogen generating composition 102 gradually decreased and lowered to about 30 degree Celsius after 20 minutes.

Here, the hydrogen generating composition 102 stored in the hydrogen gas generating body 101 in case of not existence of the hydrogen generating container 103 started the reaction with the liquid M (production of hydrogen) after thrown in the liquid M and 3 minutes passed and a peak of the reaction occurred after about 3 minutes and 30 seconds passed and reached 80.0 degree Celsius which is the maximum temperature. Thereafter, the temperature of the hydrogen generating composition 102 gradually decreased and lowered to about 30 degree Celsius after 10 minutes.

Based on these results, in the reaction of the hydrogen generating composition 102 thrown into the liquid M and the liquid M, the time reaching the peak of the reaction is slower (about 3 minutes ∼ 4 minutes or about 5 minutes ∼ 5 minutes 30 seconds) in a case that the hydrogen generating container 103 exists and the maximum temperature of the hydrogen generating composition 102 (93.1 degree Celsiusor 95.6 degree Celsius)is also higher. Further, temperature decrease of the hydrogen generating composition 102 after peak is faster in a case that the hydrogen generating container 103 does not exist.

Further, additionally speaking, there is characteristic that reaction start time and reach time to peak of reaction becomes slower in the hydrogen gas generating body 101 stored in the hydrogen generating container 103 with large space capacity 198 than in the hydrogen gas generating body 101 stored in the hydrogen generating container 103 with small space capacity 198. This is considered that reaction is promoted in the limited space in case of the hydrogen gas generating body 101 stored in the hydrogen generating container 103 with small space capacity 198 (however, the hydrogen gas generating body 101 can be surely contained).

Further, in a case that the hydrogen gas generating body 101 is directly thrown in the preparation container 170, reaction with the liquid M (production of hydrogen) within the preparation container 170 is started after about 3 minutes ∼ 3 minutes 30 seconds are passed after throw. After about 6 minutes are passed, peak of reaction reaches. At that time, the temperature of the hydrogen generating composition 102 reaches 34.7 degree Celsius which is maximum temperature. Thereafter, the temperature of the hydrogen generating composition 102 is gradually decreased and lowered to about 30 degree Celsius after 20 minutes.

Generally, in case of hydrogen reaction of the liquid M and the hydrogen generating composition 102, the reaction is promoted in a high temperature state. Thus, in the hydrogen generating composition 102 of the hydrogen gas generating body 101 contained in the small space capacity 198 within the hydrogen generating container 103, the hydrogen reaction is promoted by the liquid M (reaction water) invading in the space capacity 198 within the hydrogen generating container 103. Further, as for the liquid M invaded in the space capacity 198 within the hydrogen generating container 103, it is added a factor that heat exchange with the liquid M around the hydrogen generating container 103 is hindered by the hydrogen generating container 103 and temperature decrease of the liquid M invading in the space capacity 198 within the hydrogen generating container 103 becomes smaller than a case that the hydrogen generating container 103 is not used. This is clear from a result of temperature change of the hydrogen generating composition 102 measured by directly throwing the hydrogen gas generating body 101 storing the hydrogen generating composition 102 into the preparation container 170.

That is, as in the present embodiment, the surrounding liquid M reacting with the hydrogen generating composition 102 can be retained a higher temperature in a case that the hydrogen generating unit 199 is constituted by containing the hydrogen gas generating body 101 in the space capacity 198 of the hydrogen generating container 103, in comparison with a case that the hydrogen generating container 103 is not used. Thereby, it is considered that hydrogen reaction of the hydrogen generating composition 102 and the liquid M is promoted. Further, it is considered that the smaller the space capacity 198 within the hydrogen generating container 103 becomes, the more the hydrogen reaction of the hydrogen generating composition 102 and the liquid M is promoted.

As a result, based on the measured data mentioned in the above, it is guessed that the hydrogen reaction of the hydrogen composition 102 and the liquid M is promoted and high temperature state can be easily retained, thus average concentration of hydrogen produced in the liquid M becomes higher in a method that the hydrogen generating unit 199 having the hydrogen generating container 103 is thrown into the preparation container 170 than in a method that the hydrogen gas generating body 101 is thrown into the preparation container 170.

As mentioned, as for the hydrogen generating unit 199 in the first example of the hydrogen generating container, in the hydrogen generating unit 199 producing the hydrogen-containing liquid by throwing in the liquid M and containing hydrogen in the liquid M, wherein the hydrogen generating unit 199 is constituted from the hydrogen generating composition 102 generating hydrogen by being hydrated, the hydrogen gas generating body 101 containing the hydrogen generating composition 102 and the hydrogen generating container 103 constituted capable of containing the hydrogen gas generating body 101. Moreover, it can be said that the hydrogen generating unit 199 is characteristically constituted at a point that mutual relation between the water temperature of reaction water within the hydrogen generating container 103 and the space capacity 198 in the hydrogen generating container 103 can be controlled.

### [Second example of a hydrogen generating vessel]

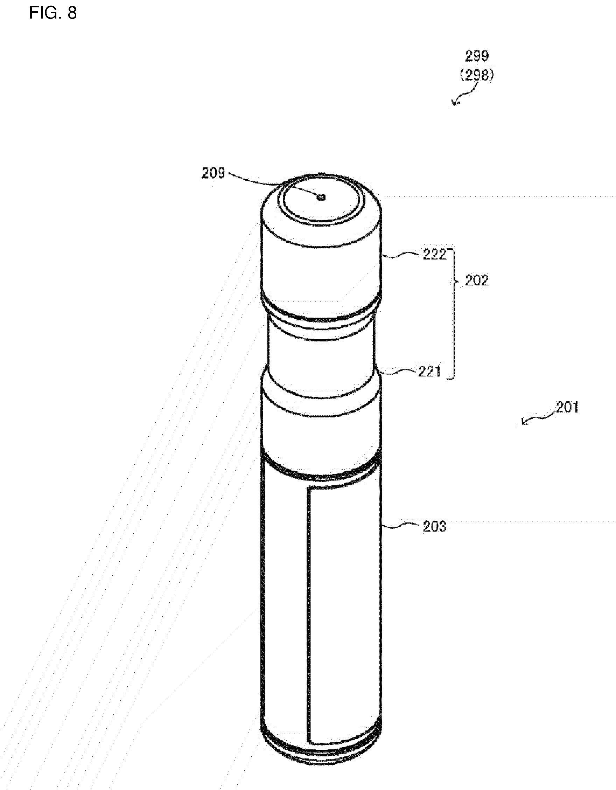

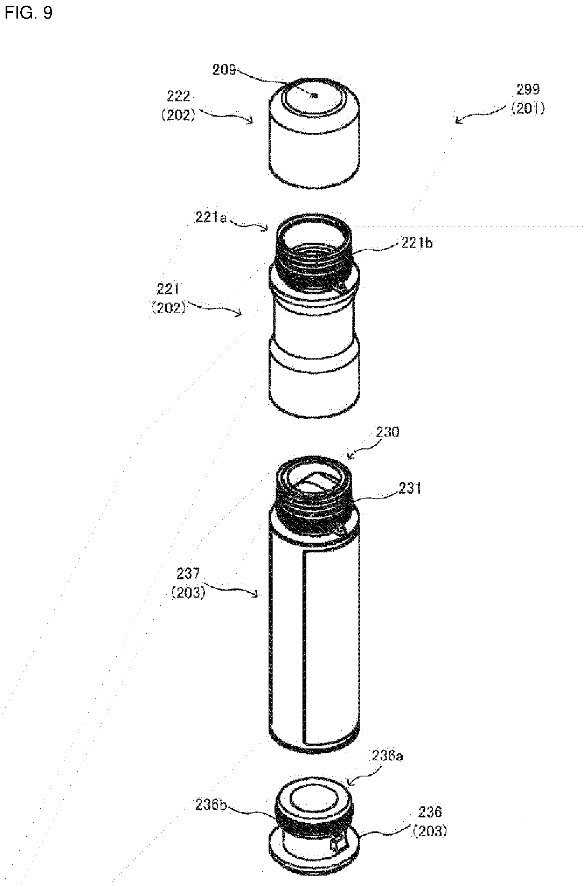

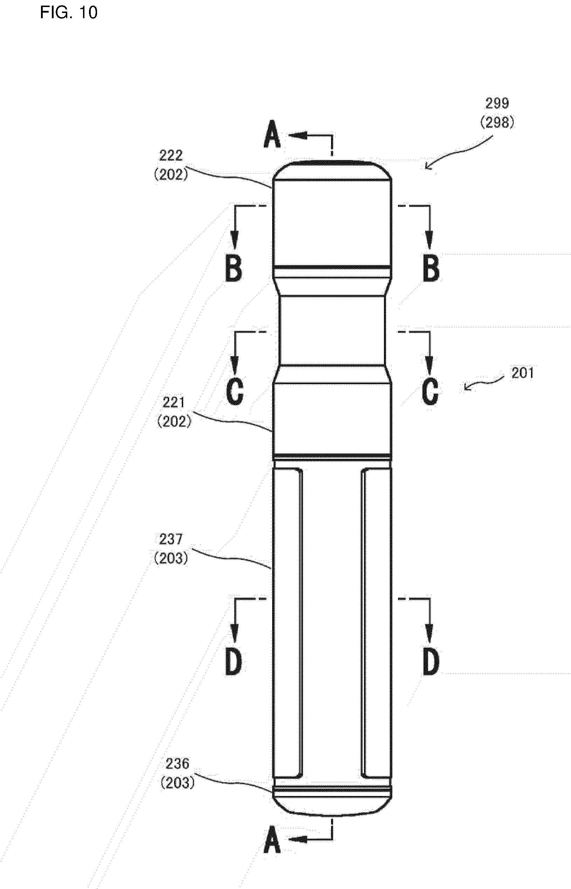

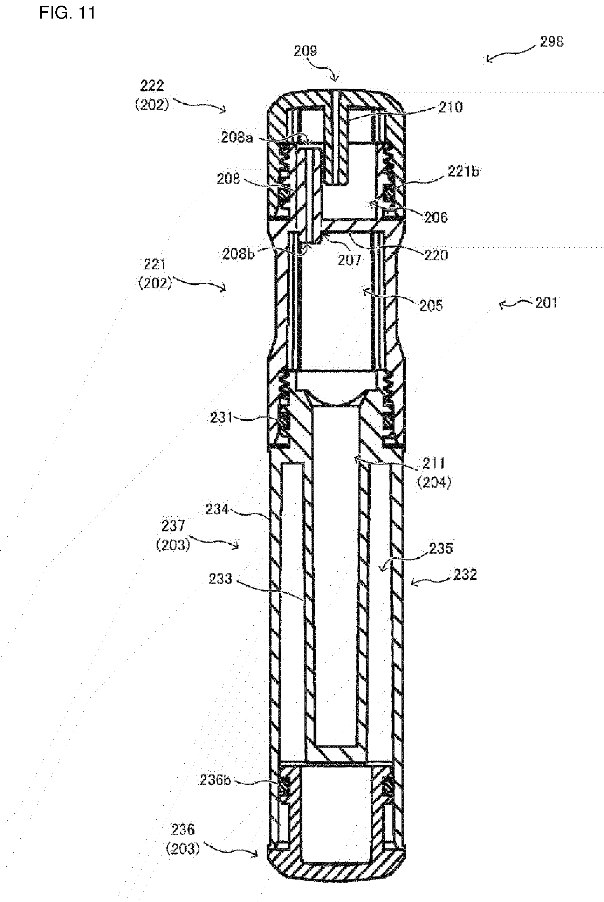

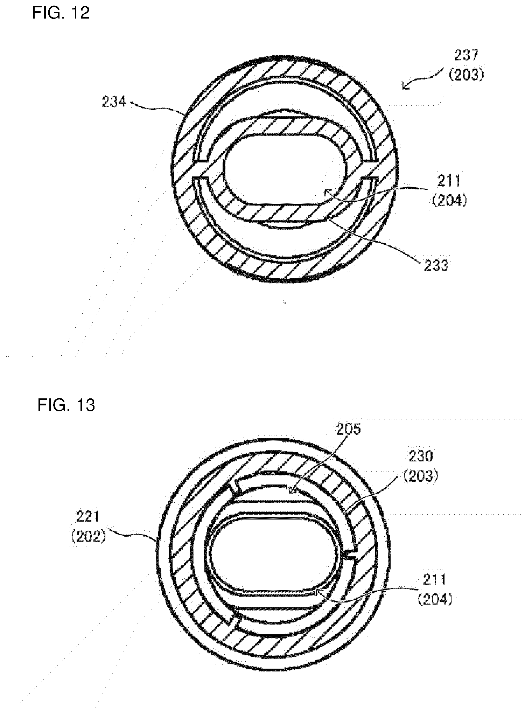

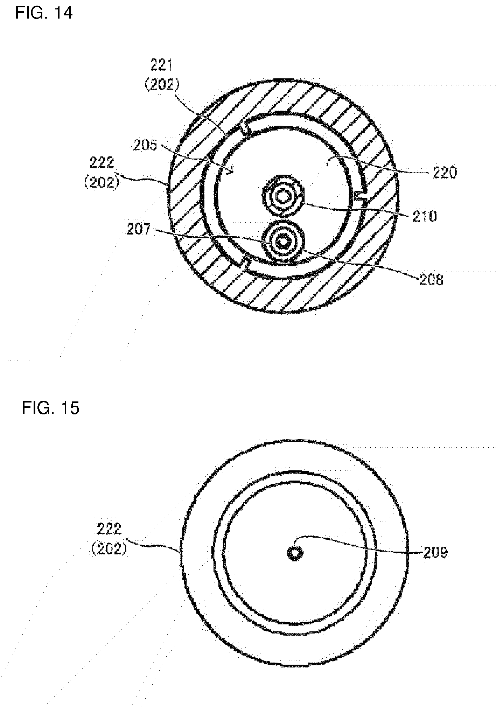

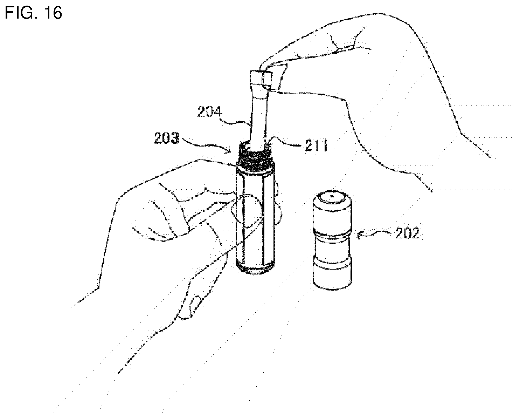

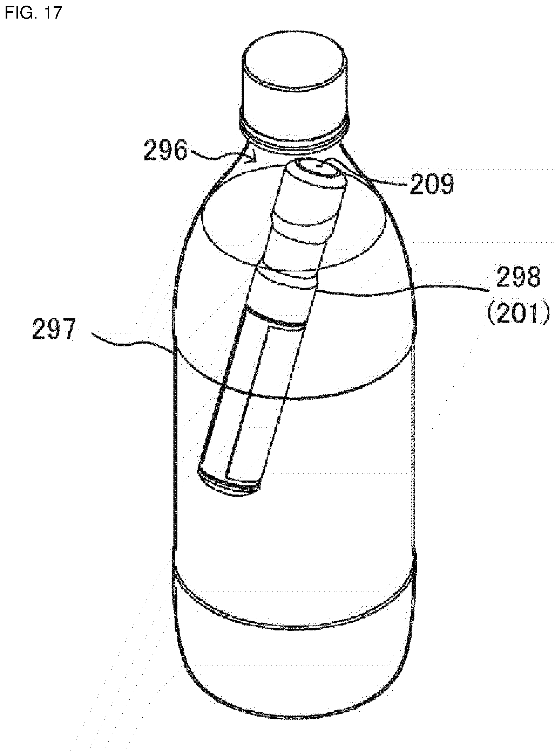

Next, a second example of the hydrogen generating container will be described. FIGS. 8 and 9 are external perspective and exploded perspective views of the hydrogen generating container, FIGS. 10 and 11 are a side view and an A-A longitudinal sectional view of the hydrogen generating container, FIG. 12 is a D-D cross-sectional view of the lower side case, FIG. 13 is a C-C cross-sectional view of the lower side case, FIG. 14 is a B-B cross-sectional view of the upper side case, FIG. 15 is a plan view of the hydrogen generating container, FIG. 16 is a perspective view showing a stored state of the hydrogen gas generating body, and FIG. 17 is a perspective view showing a used state of the hydrogen generating container.

As shown in FIGS. 8 and 9, the basic structure of the hydrogen generating container 299 is a cylindrical case 201 composed of an upper case 202 and a lower case 203 of two upper and lower stages which can be connected.

The length of the cylindrical case 201 is formed longer than the length of the inner diameter of the PET bottle to be put in. Therefore, as shown in FIG. 17, when the cylindrical case 201 is put into the PET bottle, the upper and lower ends of the cylindrical case 201 come into contact with the inner peripheral wall of the PET bottle and are not turned upside down.

As shown in FIGS. 9 to 11, the lower case 203 is formed in a bottomed cylindrical shape, and the upper end opening 230 of the upper part of the lower case 203 is formed so as to be connected to the lower end of the upper case 202 by a fitting structure or a screw structure.

More specifically, the outer periphery of the upper end opening 230 of the lower case 203 can be connected to the lower inner periphery of the upper case 202 by a fitting structure or a screw structure. A seal member 231 made of a resin O-ring is fitted to the outer periphery of the upper end opening 230.

The peripheral wall of the lower case 203 has a jacket structure 232 as shown in FIG. 11. Therefore, the function of blocking the transmission of temperature so that the water temperature of the drinking water outside the cylindrical case 201 is not transmitted to the hydrogen generating composition of the hydrogen gas generating body 204 stored in the cylindrical case 201 and blocking the transmission of reaction heat from the hydrogen generating composition of the hydrogen gas generating body 204 to the drinking water from the cylindrical case 201 is imparted to the cylindrical case 201.

That is, the jacket structure 232 has an inner wall 233 and an outer wall 234 formed with a heat insulating space 235 between the inner and outer double walls. The peripheral wall of the lower case 203 is formed to have a thick wall to improve the heat shielding effect as much as possible.

By this constitution, the reaction heat of the hydrogen generating composition of the hydrogen gas generator 204 is prevented from being transmitted to the drinking water, the hydrogen gas generation reaction by the hydrogen generating composition inside the hydrogen gas generator 204 is promoted, and the hydrogen gas generator 204 can generate a large amount of hydrogen gas in a short time.

An air case 236 is connected to the lower bottom of the lower case 203. The air case 236 is about 1/4 of the length of the lower case.

The air case 236 has a bottomed cylindrical shape and can be connected to the inner periphery of the lower end of the lower case 203 by a fitting structure or a screw structure of the outer periphery of its upper end opening 236 a. Reference numeral 36 b denotes a seal member fitted to the outer periphery of the upper end opening 236 a of the air case 236.

The air case 236 generates buoyancy when the cylindrical case 201 is put in a PET bottle. That is, as shown in FIGS. 9, 11, and 13, the lower case 203 includes a bottomed cylindrical lower case body 237 formed by a double wall of the inner wall 233 and the outer wall 234, and an air case 236 connected to a lower portion of the lower case body 237.

A vertically long flat space is formed inside the lower case 203. In the flat space, a small bag-like hydrogen gas generating body 204 storing a vertically long bag hydrogen generating composition can be stored in the vertical direction. It can be taken out after hydrogen generation.

FIGS. 11 and 16 show a state in which the vertically long bag-like hydrogen gas generator 204 is housed in the vertically long flat space of the lower case 203. That is, the vertically long flat space of the lower case 203 serves as the housing portion 211 of the hydrogen gas generator 204.

In other words, the cylindrical case 201 in which the lower case 203 and the upper case 202 housing the hydrogen gas generator 204 in the housing portion 211 are assembled is a hydrogen generation unit 298 comprising the hydrogen generation container 299 and the hydrogen gas generator 204.

The bag body constituting the hydrogen gas generator 204 is wetted by soaking half of it in water before use, that is, before being stored in the inside of the lower case 203. Thereby, the hydrogen generating composition inside the bag is brought into contact with water in advance to cause a hydrogen generating reaction. The water causing the hydrogen generation reaction may be, for example, drinking water in the PET bottle 297 or tap water.

The upper case 202 is connected to the lower case 203 so as to communicate with the inside thereof, and as shown in FIGS. 11 and 13, hydrogen generated in the lower case 203 is elevated and stored in a gas storage space 205 formed in the upper case 202.

As shown in FIG. 11, a gas filling space 206 having a height of about 1/2 of that of the upper case 202 is formed in the head of the upper case 202, and the gas storage space 205 and the gas filling space 206 are partitioned by a partition body 220.

Specifically, as shown in FIG. 9, the upper case 202 is connected to an upper portion of the lower case 203, and a gas storage space 205 is formed inside the upper case body 221, and a cap body 222 is connected to an upper portion of the upper case body 221. The cap body 222 forms a gas filling space 206.

The upper part of the upper case body 221 and the cap body 222 are connected by a fitting structure or a screw structure. Reference numeral 221 b denotes a seal member fitted to the outer periphery of the upper end opening 221 a of the upper case body 221.

The partition body 220 is provided with a small hole 207 for gas communication for communicating a gas storage space 205 under the upper case 202 with a gas filling space 206 above the upper case 202. As shown in FIGS. 11 and 14, a small pipe 208 having a check valve function is vertically fitted into the gas communication small hole 207. The thin pipe 208 is provided at the center of the gas filling space 206, that is, at a position eccentric from the center of the upper surface of the cap body 222.

As shown in FIG. 11, the thin pipe 208 has openings 208 a and 208 b at both ends thereof opened to the gas filling space 206 and the gas storage space 205, respectively, to communicate the two spaces 205 and 206.

The hydrogen gas in the gas storage space 205 is discharged into the gas filling space 206 through the thin pipe 208, but the drinking water outside the cylindrical case 201 cannot enter the cylindrical case 201 from the upper end opening 208 a of the thin pipe 208. As described above, the thin pipe 208 has a check valve function that the drinking water serving as the reaction water cannot be supplied while the hydrogen gas is supplied.

Since the cylindrical case 201 is formed so that a gas storage space 205 and a gas filling space 206 are formed in the upper half part and a heavy hydrogen gas generator 204 is stored in the lower half part, the cylindrical case 201 stored in the PET bottle 297 floats in an approximately vertical attitude with the upper half part turned upward. This is because the hydrogen gas generator 204 contained in the lower half of the cylindrical case 201 functions as a weight, and the gas storage space 205 and the gas filling space 206 in the upper half function as a float.

Therefore, the cylindrical case 201 floats in the PET bottle by buoyancy of the case in such a state that the gas discharge small hole 209 is always turned upward.

As a result, as shown in FIG. 17, hydrogen gas is accumulated in the upper part of the PET bottle 297 to form a hydrogen gas accumulation space 296. As shown in FIGS. 11 and 15, a gas discharge small hole 209 is bored in the ceiling wall of the upper end of the upper case 202, that is, in the center of the ceiling peripheral wall of the gas filling space 206, so that the gas discharge small hole 209 is always opened in the hydrogen gas storage space 296.

By this constitution, the intrusion of the drinking water in the PET bottle 297 into the cylindrical case 201 can be suppressed as much as possible.

Specifically, the gas discharge small hole 209 is provided in the substantially central portion of the upper surface of the cap body 222 of the upper case 202 to discharge hydrogen gas generated in the case to the outside of the case.

A fine pipe 210 is communicated with the gas discharge small hole 209, and the tip of the fine pipe 210 is communicated with the inside of the gas filling space 206.

The thin pipe 210 and the thin pipe 208 having the check valve function partially overlap each other in a side view as shown in FIG. 11, and are located at positions eccentric from the center position in a plan view as shown in FIG. 14. By the synergistic function of the thin pipe 210 arranged in this manner and the thin pipe 208 having the check valve function, hydrogen gas can be discharged from the gas storage space 205, and the drinking water outside the cylindrical case 201 cannot enter the cylindrical case.

If drinking water enters the case from the outside of the case, metal ions generated during the reaction of the hydrogen generating composition inside the hydrogen gas generating body 204 with water are dissolved in the entering drinking water. The drinking water becomes metal ion water and elutes to the outside of the case along the infiltration route, and is mixed into the drinking water in the PET bottle.

Specifically, the relation between the internal pressures of the upper and lower cases 202 and 203 (Cylindrical case 201) and the PET bottle 297 is such that the internal pressures of the upper and lower cases are equal to or greater than the internal pressures of the PET bottle when hydrogen gas is generated, but after the completion of hydrogen gas generation, that is, after the completion of the hydrogen gas generation reaction, the hydrogen gas inside the case heated by the reaction heat is cooled and contracted, or the internal pressures of the upper and lower cases are equal to or greater than the internal pressures of the PET bottle 297 by strongly gripping the PET bottle.

As a result, if the gas discharge small hole 209 is in the drinking water, the drinking water is sucked into the case by the internal pressure of the PET bottle higher than the internal pressure of the upper and lower cases to form metal ion water, and the metal ion water is inadvertently discharged to the outside of the case to contaminate the drinking water with metal ions.

Therefore, when the metal ion is charged into the PET bottle 297, the metal ion can be blocked from eluting into the drinking water by preventing the drinking water outside the case from entering into the case.

The fine pipes 208, 210 function for the metal ion block, and at the same time, even if a small amount of water enters into the upper and lower cases 202, 203 than the fine pipe 210, the synergistic function of the fine pipe 208 and the fine pipe 210 prevents the discharge of the metal ion water to the outside of the upper and lower cases 202, 203.

In other words, the opening directions of the gas filling space 206 and the gas filling space 206 of the thin pipe 210 and the thin pipe 208 having the check valve function are alternately arranged. Further, it is provided so as to partially overlap in a side view and become a position eccentric from a center position in a plane view. By providing the respective thin pipes at such positions, it is possible to prevent the outflow of the metal ion water and to discharge the hydrogen gas.

That is, the fine pipe 210 and the fine pipe 208 having the check valve function can perform the check valve function of suppressing the movement of the metal ion water to the outside of the cylindrical case 201 as much as possible, and the gas filling space 206 can perform the trap space function of storing the partially moved infiltration water or the metal ion water.

With such a structure, it is possible to effectively discharge hydrogen gas from the upper and lower cases 202 and 203, and to block the discharge of the infiltration water or the metal ion water into the drinking water.

The hydrogen generating container 299 constructed as described above is used in the following manner.

First, the cylindrical case 201 of the hydrogen generating container 299 according to the present embodiment is vertically decomposed into an upper case 202 and a lower case 203.

Next, the bag-shaped hydrogen gas generator 204 is immersed in the drinking water of the PET bottle 297 to be moistened, and is quickly stored in the decomposed lower case 203 as shown in FIG. 16.

Next, an upper case 202 and a lower case 203 are assembled to construct a cylindrical case 201, that is, a hydrogen generation unit 298 comprising a hydrogen generation container 299 storing a hydrogen gas generation body 204.

Next, the hydrogen generating container 299 is directly charged into the PET bottle 297, and after the lid of the PET bottle 297 is closed, the PET bottle is shaken several tens of times.

The hydrogen generating container 299 (Cylindrical case 201) floats in the drinking water in a state in which the small gas discharging hole 209 is always directed upward in the PET bottle and an approximately vertical attitude is held.

Then, the hydrogen gas generator 204 stored in the lower case 203 is allowed to stand for 10 ∼ 15 minutes to react with the moistened water to generate hydrogen gas. That is, hydrogen gas bubbles are generated from the gas discharge small holes 209 of the hydrogen generation container 299.

At this time, the hydrogen gas generating body 204 generates heat in accordance with the hydrogen gas generating reaction of the hydrogen generating composition, but as shown in FIG. 11, this reaction heat is blocked by the jacket structure 232 formed on the peripheral wall of the lower case 203, is not transmitted to the outer peripheral wall of the case, and is not radiated to the drinking water in the PET bottle 297.

The hydrogen gas generated from the hydrogen gas generator 204 is stored in a fixed amount in a gas storage space 205 above the hydrogen gas generator 204, and is fed to a gas filling space 206 at the head of the upper case 202 through a fine pipe 208 communicated with a gas communication small hole 207 as the internal pressure increases.

Further, the hydrogen gas fed to the gas filling space 206 fills the inside of the gas filling space 206. Air is supplied to the outside of the cylindrical case from the fine pipe 210 communicated with the small hole 209 for gas discharge of the gas filling space 206.

As shown in FIG. 17, hydrogen gas is stored above the PET bottle 297 to form a hydrogen gas storage space 296, and the internal pressure of the PET bottle is gradually increased to dissolve the hydrogen gas in the drinking water. The gas discharge small hole 209 of the gas filling space 206 is opened upward by the float function of the upper half of the cylindrical case 201. That is, the gas discharge small hole 209 is opened in the hydrogen gas reservoir space 296 above the water surface of the drinking water.

Due to the hydrogen gas continuously generated from the hydrogen gas generator 204 by the hydrogen gas generation reaction, the inner pressure of the cylindrical case becomes higher than or the same as the inner pressure of the PET bottle, and the upper half of the cylindrical case 201 is lifted by the float function, so that drinking water does not enter the cylindrical case from the gas discharge small holes 209.

After the completion of the hydrogen reaction, the PET bottle 297 is shaken to mix the hydrogen gas in the hydrogen gas storage space 296 in the PET bottle with the drinking water so that the hydrogen gas is forcibly dissolved in the drinking water.

However, when the hydrogen gas generation reaction is completed, the temperature inside the cylindrical case 201 is lowered, and the inner pressure of the cylindrical case becomes lower than the inner pressure of the PET bottle due to the increase of the inner pressure of the bottle by the grip when the PET bottle is shaken, and there is a risk that the drinking water enters the inside of the cylindrical case 201 and the metal ions are eluted into the drinking water from the entry passage.

However, the thin pipe 208 having the check valve function and the other thin pipes 210 exhibit a synergistic effect with each other, thereby performing a check valve function not to output the metal ion water to the outside of the upper and lower side cases 202 and 203.

In other words, since the thin pipe 210 and the thin pipe 208 perform the water backflow preventing function and the gas discharging function in the gas filling space 206, the infiltration water and the metal ion water can be blocked from flowing out to the drinking water.

After the hydrogen generating unit 298 is used, the cylindrical case 201 is decomposed into the upper case 202 and the lower case 203 to remove the spent hydrogen gas generating body 204 of the lower case 203, and the drinking water or metal ion water adhering to the inner peripheral walls of the upper case 202 and the lower case 203 forming the gas storage space 205, the inner peripheral wall of the storage part 211 of the lower case 203, and the like is washed.

Further, since the upper case 202 can be decomposed into the cap body 222 and the upper case body 221, the drinking water and the metal ion water staying in the gas filling space 206 of the upper case 202 can be washed, and the hydrogen generating container 299 can be repeatedly and sanitarily used by using a new and different hydrogen gas generating body 204.

According to the hydrogen generating container 299, the hydrogen gas generated in the lower case is stored in the gas storage space, the internal pressure is increased, the hydrogen gas is fed from the fine pipe having the check valve function, filled in the gas filling space, and discharged to the outside of the case. Therefore, even if the cylindrical case is put in the PET bottle, the drinking water and the metal ion water do not flow back into the upper and lower cases by the respective fine pipes. At the same time, hydrogen gas is discharged into the PET bottle from the outside of the upper and lower cases through the respective fine pipes and dissolved in drinking water to form hydrogen water.

Further, since the peripheral wall of the lower case has a jacket structure, the reaction heat of the hydrogen generating composition of the hydrogen gas generating body is not absorbed by the drinking water to be cooled. Therefore, hydrogen gas generation reaction of the hydrogen generating composition is promoted, a large amount of hydrogen gas is generated in a relatively short time, and hydrogen water is generated in a short time.

That is, according to the hydrogen generating container 299 as in the second example of the hydrogen generating container, the hydrogen generating unit mainly comprising the upper and lower cases capable of quickly generating hydrogen gas by housing the hydrogen gas generating body can be constituted, and the hydrogen generating unit can function as a check valve so that the metal ions are not dissolved in the drinking water.

### [Third example of a hydrogen generating vessel]

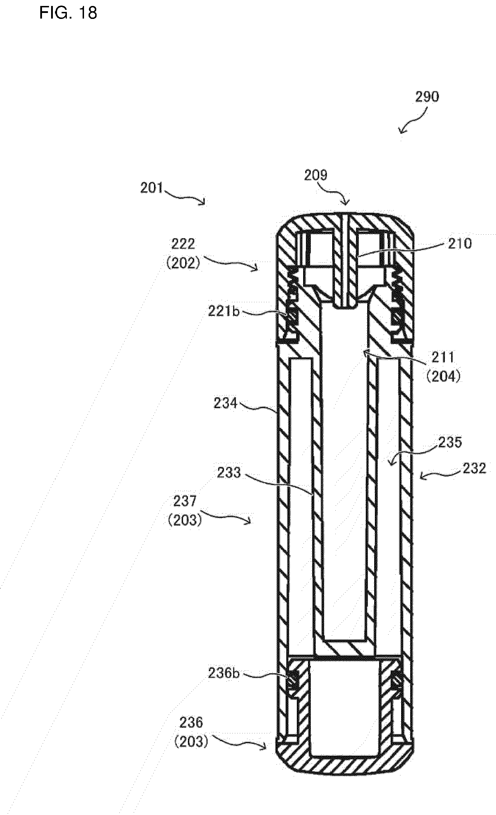

Next, a third example of the hydrogen generating container will be described. FIG. 18 is an explanatory view showing a longitudinal section of the hydrogen generating container according to the third example.

The hydrogen generating container 290 according to the third example is also a hydrogen generating container usable as an essential component of the hydrogen water generating kit X for storing the hydrogen gas generators A to D1 according to any of the first to fourth examples to prepare hydrogen water.

The hydrogen generating container 290 has substantially the same configuration as that of the hydrogen generating container 299 according to the second example, except that the hydrogen generating container 299 is composed of four members, that is, a cap body 222, an upper case body 221, a lower case body 237, and an air case 236, and the hydrogen generating container 290 is composed of three members, that is, a cap body 222 excluding the upper case body 221, a lower case body 237, and an air case 236. In FIG. 18, the same components as those of the hydrogen generating container 299 according to the second example are denoted by the same reference numerals and descriptions thereof will be omitted.

The upper case body 221 is interposed between the cap body 222 and the lower case body 237 to form a gas filling space 206 on the side of the upper case 202 and a gas storage space 205 on the side of the upper case body 221 with a partition body 220 therebetween.

It is needless to say that the hydrogen generating unit 298 including the upper case body 221 is advantageous in order to suppress the outflow of the metal ions to the liquid M, but the hydrogen generating container 290 according to the third example has no trap structure formed by the upper case body 221 and has little ventilation resistance, so that the hydrogen generated in the containing portion 211 can be smoothly discharged to the liquid M.

Although the gas storage space 205 and the gas filling space 206 are useful spaces, they also have a side surface as a dead volume and a part of the generated hydrogen remains in the hydrogen generation unit 298, but the capacity as the dead volume is small and the generated hydrogen can be diffused more into the container.

Since the dead volume is small and the generated hydrogen is immediately diffused into the container, the hydrogen concentration of the liquid M can be rapidly increased.

The overall size is shorter than that of the hydrogen generating unit 298 and can be made compact.

Further, when the pressure in the accommodating portion 211 is lower than the pressure outside the hydrogen generating vessel 290, that is, the pressure of the liquid M, the liquid M flows into the accommodating portion 211 through the fine pipe 210, and the hydrogen gas generators A to D1 accommodated in the accommodating portion 211 are further brought into contact with the liquid M, so that a better hydrogen generating reaction is achieved by the hydrogen gas generators A to D1.

Finally, the description of the above-described embodiments is an example of the present invention, and the present invention is not limited to the above-described embodiments. Therefore, it is needless to say that various changes can be made according to the design or the like as long as the invention does not deviate from the technical idea of the present invention even in the embodiments other than those described above.

- A: hydrogen generating body (first embodiment)
- B: hydrogen generating body (second embodiment)
- C: hydrogen generating body (third embodiment)
- D: Hydrogen gas generators (Fourth Embodiment)
- D1: Hydrogen gas generator (Modification of the Fourth Embodiment)
- H: hydrogen gas
- M: liquid
- 1: container body
- 2: base material
- 3: hydrogen generating composition
- 4: hydrogen gas permeable membrane
- 15: Lower Half
- 16: Internal and external flow blocking portion
- 17: end side
- 101: hydrogen gas generating body
- 103: hydrogen generating container
- 204: Hydrogen gas generators
- 299: HYDROGEN GENERATING CONTAINER
- 290: HYDROGEN GENERATING CONTAINER

## Claims

1. A hydrogen gas generating body for producing hydrogen-containing liquid by throwing into liquid and containing hydrogen in the liquid, comprising;
a hydrogen generating composition generating hydrogen by being hydrated; and
a containing body formed by overlaying a hydrogen gas permeable membrane on a base material made of pouched un-woven fiber, the containing body being capable of freely containing the hydrogen generating composition.

2. The hydrogen gas generating body according to claim 1, wherein the hydrogen gas permeable membrane is overlaid on an inner side of the base material.

3. The hydrogen gas generating body according to claim 1, wherein the hydrogen gas permeable membrane is overlaid on an outer side of the base material.

4. The hydrogen gas generating body according to claim 1, wherein the base material is formed in two layers and the hydrogen gas permeable membrane is overlaid in a gap formed in the two layers.

5. An interior/exterior flow blocking portion is provided in a lower half portion of an outer peripheral surface of the container according to any one of claims 1 to 4, and the inflow of the liquid into the interior and the outflow of the reaction residue to the exterior are blocked,
wherein the hydrogen generating composition is surrounded by the inside/outside flow blocking part and is substantially sealed on the end side of the lower half part of the housing body.

6. The hydrogen gas generator according to claim 5, wherein the end portion of the lower half portion of the housing is formed with a sharp tip, and the inner and outer flow blocking portion is also formed with a sharp tip.
